**Europäisches Patentamt**

**European Patent Office**

**Office européen des brevets**

(19)

(11) Veröffentlichungsnummer: **0 201 044 B1**

# EUROPÄISCHE PATENTSCHRIFT

(12)

(45) Veröffentlichungstag der Patentschrift: **10.07.91**

(21) Anmeldenummer: **86105972.3**

(22) Anmeldetag: **30.04.86**

(51) Int. Cl.⁵: **B29C 51/06**, B29C 51/26, B29C 51/10

(54) **Verfahren und Vorrichtung zum Umformen von thermoelastisch erweichten Kunststoffplatten.**

(30) Priorität: **08.05.85 DE 3516467**

(43) Veröffentlichungstag der Anmeldung:
**17.12.86 Patentblatt  86/46**

(45) Bekanntmachung des Hinweises auf die
Patenterteilung:
**10.07.91 Patentblatt  91/28**

(84) Benannte Vertragsstaaten:
**AT DE FR GB IT NL**

(56) Entgegenhaltungen:
**DE-A- 2 846 426**
**US-A- 4 443 401**

(73) Patentinhaber: **Röhm GmbH**
**Kirschenallee Postfach 4242**
**W-6100 Darmstadt 1(DE)**

(72) Erfinder: **Pühler, Horst**
**Jahnstrasse 8**
**W-6109 Mühltal 2(DE)**

## Beschreibung

Die Erfindung betrifft ein Verfahren und eine Vorrichtung zum Umformen von thermoelastisch erweichten Kunststoffplatten mit Hilfe von Formwerkzeugen oder Formhilfswerkzeugen. Unter Formwerkzeugen werden hier Hilfsmittel verstanden, die beim Umformverfahren auf die erweichte Kunststoffplatte formgebend einwirken und diese Einwirkung bis zur Abkühlung der Kunststoffplatte unter die Erweichungstemperatur aufrechterhalten. Demgegenüber wirken Formhilfswerkzeuge nur vorübergehend auf die erweichte Kunststoffplatte ein und werden von dieser vor deren weiterer Verformung und vor der Abkühlung unter die Erweichungstemperatur wieder getrennt.

## Stand der Technik

Eine Vielzahl von Umformverfahren, die mit Formwerkzeugen, Formhilfswerkzeugen oder beiden arbeiten, sind in der Firmenschrift "Acrylic Materials/Shaping by Heat Forming" der Imperial Chemical Industries Ltd., (London, 1960) beschrieben. Bei diesen Verfahren ist es in der Regel unvermeidbar, daß die Formwerkzeuge oder Formhilfswerkzeuge an den Oberflächen der verformten Kunststoffplatte Spuren hinterlassen, welche den ursprünglichen Glanz und die Gleichmäßigkeit der Kunststoffplatte stören. Diese Spuren treten auch dann auf, wenn die Werkzeugoberflächen hochglänzend bearbeitet sind oder - als Formhilfswerkzeuge - nur vorübergehend auf die erweichte Kunststoffplatte einwirken. In der Praxis lassen sich die Abdruckspuren vermindern, aber nicht völlig vermeiden, wenn man die Werkzeugoberflächen mit einer Schicht eines weichen flauschigen Stoffes belegt, der einerseits eine zu schnelle Abkühlung der äußersten Oberflächenschicht des Kunststoffes verhindert und andererseits unvermeidliche Staubteilchen nicht in die erweichte Kunststoffoberfläche eindrückt.

Gemäß DE-PS 2 455 256 werden Hohlkörper aus Folien oder Filmen aus thermoplastischen Kunststoffen mittels eines als Formhilfswerkzeug wirkenden aufweitbaren Formgebungsstempels erzeugt. Der aufweitbare Formgebungsstempel besteht aus einer Vielzahl auseinanderspreizbarer Lamellen, die von einer Haube aus elastischem Material umschlossen sind. Mit diesem Stempel wird das erweichte Kunststoffmaterial in ein Hohlformwerkzeug eingezogen, durch Spreizen der Lamellen gedehnt und dann durch einseitigen Überdruck von dem Stempel abgehoben und an die Hohlformwandung angepreßt.

Bei diesem bekannten Formhilfswerkzeug ist die elastische Schicht, aus der die Haube besteht, nicht flächig mit den Lamellen verbunden, sondern diese gleiten beim Spreizen über die elastische Schicht. Der Haube kommt die Aufgabe zu, die Entstehung von Dünnstellen und Riefen in den verformten Folien oder Filmen zu verhindern, die bei ihrer Abwesenheit entstehen würden. Die Erhaltung der Oberflächenqualität spielt bei dem bekannten Verfahren keine Rolle, da es sich um die Innenseite eines Hohlkörpers handelt. Daher hat auch die Oberflächenqualität des elastischen Materials der Haube keine Bedeutung. Die Elastizität der Haube muß lediglich ausreichen, die Spreizung der Lamellen zu gestatten. Ähnliche Formwerkzeuge oder Formhilfswerkzeuge mit elastisch spreizbaren Teilen sind auch aus DE-A 28 46 426 und US 4 443 401 bekannt. In beiden Fällen kann der elastische Teil des Werkzeugs teilweise an dem starren Werkzeugkörper anliegen.

## Aufgabe und Lösung

Die Erfindung geht von dem zuletzt beschriebenen Verfahren aus, bei dem eine thermoelastisch erweichte Kunststoffplatte mit einem starren Formwerkzeug oder/und Formhilfswerkzeug über eine elastische Schicht in flächige Berührung tritt und durch das Werkzeug wenigstens vorübergehend verformt wird.

Die Erfinder haben sich die Aufgabe gestellt, bei einem Verfahren dieser Art die Beeinträchtigung der Oberfläche der umzuformenden Kunststoffplatte zu vermindern. Insbesondere besteht das Ziel, den Glanz der Oberfläche zu erhalten und Unebenheiten, die sich der gewünschten Oberflächengestalt überlagern, zu vermeiden. Derartige Unebenheiten stören vor allem bei hochglänzenden Formkörpern durch eine Veränderung des Reflexionsverhaltens schon dann, wenn die Abweichungen von der gewünschten geometrischen Form noch nicht meßbar sind.

Es wurde gefunden, daß die gestellte Aufgabe beim Einsatz von Formwerkzeugen bzw. Formhilfswerkzeugen, deren starrer Körper an den Stellen, mit denen sie auf die erweichte Kunststoffplatte verformend einwirken, mit der elastischen Schicht flächig verbunden ist, dadurch gelöst werden kann, daß die elastische Schicht aus einem Material mit glatter, geschlossener Oberfläche und einer höheren Elastizität als der Elastizität der erweichten Kunststoffplatte besteht.

## Die vorteilhafte Wirkung der Erfindung

Für die Vermeidung von störenden Abdrücken in der Oberfläche des erzeugten Formkörpers ist es wesentlich, daß die elastische Schicht zumindest an den Stellen, an denen das Werkzeug auf die erweichte Platte verformend einwirkt, flächig verbunden und voll unterstützt ist. Dadurch wird die Gestalt des Formwerkzeugs vollständig durch seinen starren Körper bestimmt. Dagegen ist die elastische Haube bei dem Werkzeug gemäß DE-PS 2 455 256 zwischen den gespreizten Lamellen nicht mit dem Körper des Werkzeugs flächig verbunden und unterstützt, sondern bildet eine elastisch gespannte Haut, die dem Gegendruck der erweichten Kunststoffschicht mehr oder weniger stark nachgeben kann. An den Grenzen des durch die Lamellen unterstützten Bereichs der elastischen Schicht sind Abdrücke der Lamellen unvermeidbar. Bei dem erfindungsgemäß eingesetzten Werkzeug darf die elastische Schicht höchstens an Stellen des Werkzeuges, die nicht formgebend wirksam sind, beispielsweise innerhalb einer ebenen Fläche, frei gespannt und ohne flächige Stützung durch den starren Werkzeugkörper vorliegen.

Die Elastizität der Schicht kommt nur innerhalb der Schicht selbst zur Wirkung, wenn z.B. Staubpartikel zwischen der Werkzeugoberfläche und der erweichten Kunststoffplatte liegen. Da die elastische Schicht weicher als die thermoplastisch erweichte Kunststoffplatte ist, drücken sich die Partikel stärker in diese Schicht als in die Kunststoffplatte ein. Die an dem starren Werkzeugkörper anliegende Seite der elastischen Schicht bleibt dabei in unveränderter Lage.

Abdrücke, die auf die Struktur der elastischen Schicht zurückgehen, werden dadurch vermieden, daß ihre Oberfläche glatt und geschlossen ist. Ungeeignet sind z.B. Weichschaumschichten mit offenporiger Oberfläche. Die Oberfläche ist als glatt zu bezeichnen, wenn sie keine Strukturelemente, wie Erhebungen, Grate, Furchen oder Löcher mit Abmessungen über 0,1 mm aufweisen. Dagegen ist eine gewisse Mattierung oder Rauhigkeit erforderlich, die durch Schleifen, z.B. mit Schleifpapier einer Körnung von 240, erzeugt werden kann.

Störende Werkzeugabdrücke lassen sich beim Verfahren der Erfindung praktisch vollständig vermeiden, wenn das mit der elastischen Schicht ausgerüstete Formhilfswerkzeug nur in einem begrenzten Zeitabschnitt während des Umformverfahrens mit der erweichten Kunststoffplatte in Berührung tritt und von diesem vor dessen Abkühlung unter die Erweichungstemperatur wieder getrennt wird.

## Anwendung

Die Erfindung dient überwiegend zur Umformung von hochglänzenden Kunststoffplatten zu hochwertigen Formkörpern, wie Badewannen oder ähnlichen Sanitärteilen. Während einfache Formkörper, wie Lichtkuppeln, ohne Formwerkzeuge herstellbar sind, ist es bei der Herstellung kompliziert gestalteter Formkörper oft unvermeidlich, die Schauseite der Platte bzw. des Formkörpers wenigstens vorübergehend mit Formwerkzeugen oder Formhilfswerkzeugen in Berührung zu bringen. Dies ist beim Verfahren der Erfindung ohne schwerwiegende Beeinträchtigung der Oberflächenqualität, vor allem des Glanzes, möglich, selbst wenn auf die Oberfläche erhebliche Werkzeugkräfte einwirken.

## Ausführung

Als Kunststoffplatte kommen flache Tafeln von 1 bis 15 mm Dicke aus thermoelastisch verformbaren Kunststoffen in Betracht. Die zulässige Größe richtet sich nach den Abmessungen des herzustellenden Formkörpers und der Größe der Umformmaschine. Gebräuchlich sind Plattengrößen zwischen 0,1 und 10 qm.

Thermoelastisch verarbeitbare Kunststoffe sind z.B. Polystyrol, Polyvinylchlorid, Celluloseester und insbesondere Polymethylmethacrylat (Acrylglas). Im thermoelastischen Zustand, der für die genannten Kunststoffe zwischen etwa 100 und 200°C liegt, sind die Kunststoffe elastisch und mindestens um 70% (linear) dehnbar.

Die Formwerkzeuge oder Formhilfswerkzeuge enthalten einen starren Grundkörper aus Holz, Metall oder Kunststoff, dessen Festigkeit ausreichen muß, um die zur elastischen Verformung der Kunststoffplatte erforderlichen Kräfte aufzubringen. Die elastische Schicht hat in der Regel eine Dicke von 0,1 bis 10 mm. Dünnere Schichten bieten keine Gewähr, daß Staubpartikel keinen Abdruck in der Kunststoffoberfläche hinterlassen. Dickere Schichten bringen keinen Vorteil, sind aber weniger wirtschaftlich. Formhilfswerkzeuge, von denen sich die Kunststoffplatte während des Umformvorganges im thermoelastischen Zustand wieder lösen muß, enthalten vorzugsweise unter der elastischen Schicht eine Zwischenschicht aus wärmeisolierendem Material, z.B. Hart- oder Weichschaumstoff. Geeignet sind z.B. Polymethacrylimidschaumstoffe oder Polyätherschaumstoffe.

Die elastische Schicht muß unter den Bedingungen des Umformverfahrens elastischer, d.h. weicher sein als die thermoelastisch erweichte Kunststoffplatte. Selbstverständlich muß sie gegen die beim Umformverfahren auftretenden Temperaturen und Kräfte beständig sein. Die Materialauswahl muß daher in enger Abstimmung mit dem umzuformenden Kunststoff und dessen Verarbeitungstemperatur getroffen werden.

Die Kraft-Dehnungs-Kurven der verwendbaren Kunststoffe sind für alle geeigneten Kunststoffe bekannt. Der Werkstoff der elastischen Schicht wird vorzugsweise so gewählt, daß seine Kraft-Dehnungs-Kurve schon bei Raumtemperatur unter derjenigen (also bei höheren Dehnungswerten) des thermoelastisch erweichten Kunststoffes verläuft. Zumindest sollte dies für die Verformungstemperatur zutreffen.

Acryglasplatten werden bei 140 bis 200° C verformt. Geeignete elastische Schichten für die Verarbeitung von Acrylglas können z.B. aus schwach vulkanisiertem Gummi (Paragummi) oder weichem Fluorkautschuk, ionisch vernetzten Polyacrylaten oder Silikonkautschuk bestehen. Die Shore-Härte A bei Raumtemperatur (20° C) liegt vorzugsweise unter 80, insbesondere unter 50.

Die elastische Schicht ist erfindungsgemäß mit dem starren Werkzeugkörper wenigstens an den Stellen, an denen er verformend auf die Kunststoffplatte einwirkt, flächig verbunden. Diese Verbindung braucht nicht unlösbar zu sein, vielmehr genügt es, daß sich die elastische Schicht während der Berührungszeit mit der erweichten Kunststoffplatte gegenüber dem Werkzeugkörper nicht verschiebt. Zweckmäßigerweise ist die elastische Schicht vollflächig mit dem Werkzeugkörper verklebt. In manchen Fällen reicht es aus, nur den Rand der elastischen Schicht anzukleben oder in anderer geeigneter Weise an dem Werkzeugkörper zu befestigen.

Die Werkzeuge werden in an sich bekannter Weise zur Umformung der in einem Rahmen eingespannten Kunststoffplatte eingesetzt. Vorzugsweise wird die erweichte Kunststoffplatte mittels einseitigen Über- oder Unterdruckes an die Werkzeugoberfläche angelegt. In der Regel wird nur zur Verformung der Schauseite ein erfindungsgemäß mit einer elastischen Schicht belegtes Werkzeug eingesetzt, während die Rückseite mit herkömmlichen, unelastischen Werkzeugen bearbeitet werden kann.

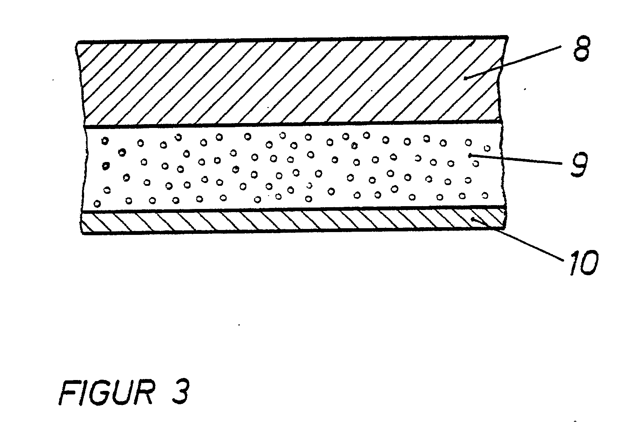

Eine bevorzugte Anwendung der Erfindung wird an den Figuren 1 bis 3 beispielhaft erläutert.

**Figur 1** stellt schematisch im Schnittbild eine herkömmliche Umformvorrichtung mit eingelegter, thermoplastisch erwärmter Kunststoffplatte vor Beginn des Umformverfahrens dar;

**Figur 2** zeigt im Schnittbild die erfindungsgemäße Umformvorrichtung mit eingelegter thermoplastisch erwärmter Kunststoffplatte während des Umformverfahrens;

**Figur 3** stellt einen Ausschnitt aus einem erfindungsgemäß eingesetzten Formhilfswerkzeug dar.

Dieses Verfahren wird vorzugsweise dann angewendet, wenn ein sehr hohes, bis dicht an den Spannrahmen heranreichendes Positivwerkzeug benutzt wird. Ein typisches Beispiel ist eine Badewannenform, die als Positivwerkzeug nur an der Unterseite der Kunststoffplatte anliegt und somit nicht mit einer elastischen Schicht belegt zu werden braucht.

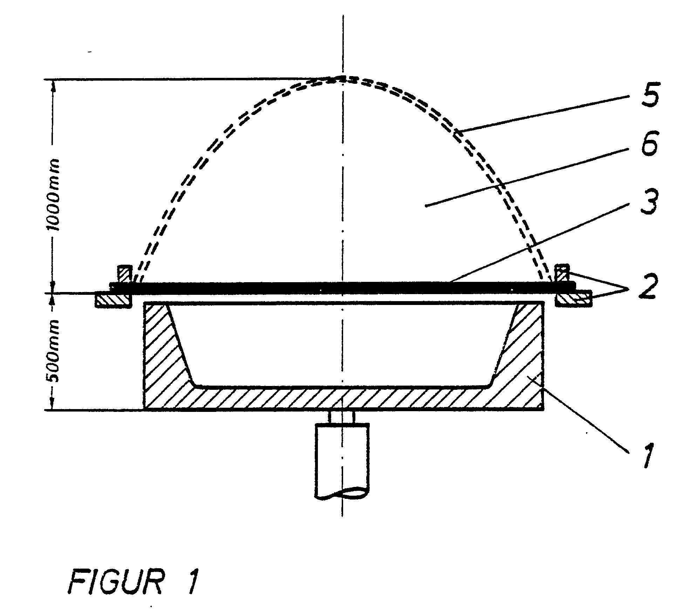

Würde man das Werkzeug 1 von unten gegen die in den Rahmen 2 gespannte, thermoelastisch erwärmte Kunststoffscheibe 3 fahren, so würden die Schürzen 4 und der Wannenboden unerwünscht dünn. Es ist daher üblich, die Platte zunächst frei zu einer Kuppel (in Figur 1 gestrichelt als 5 dargestellt) vorzuwölben, das Werkzeug 1 in den Kuppelhohlraum 6 einzufahren und anschließend die vorgewölbte Kuppel durch Verminderung des Druckes und schließlich durch Anlegen von Vakuum an das Formwerkzeug 1 anzulegen.

Um eine Wanne mit 500 mm Schürzenhöhe zu formen, muß die Kuppel 5 bis zu einer Höhe von 1000 mm vorgewölbt werden. Dazu wird ein hoher Druck von z.B. 2 bar benötigt. Unter diesem Druck oder beim Einfahren des Formwerkzeuges kann gelegentlich die vorgewölbte Kuppel reißen, wodurch die ganze Kunststoffplatte unbrauchbar wird.

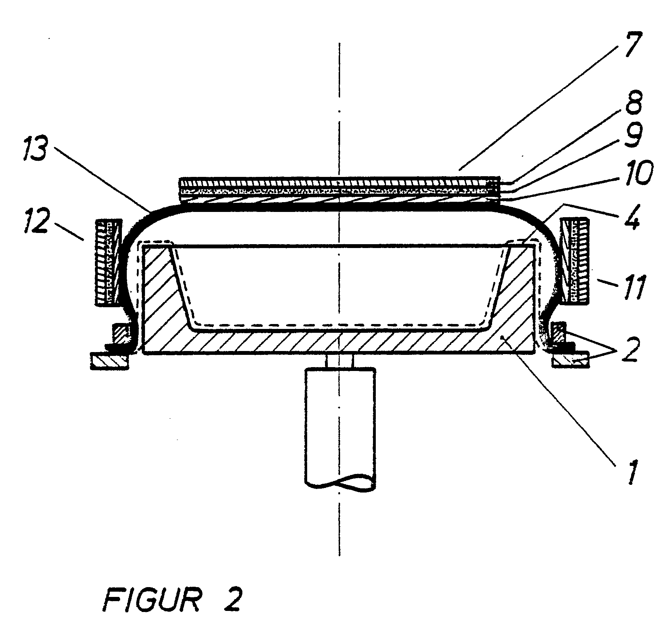

Beim Verfahren der Erfindung wird die Platte 3 vorgewölbt, bis sie sich an die Prallplatte 7 anlegt. Diese ist im Sinne der Erfindung aus einer starren Grundplatte 8, einer isolierenden Schaumstoffschicht 9 aus 20 mm dickem Polymethacrylimidschaumstoff und einer 3 mm dicken elastischen Schicht 10 aus aufgerauhtem Paragummi mit einer Shore-Härte A von 43 aufgebaut. Erforderlichenfalls können zusätzlich gleichartige Prallplatten 11, 12 als weitere Formhilfswerkzeuge an den Seiten mitverwendet werden, um eine zu starke seitliche Auswölbung der Platte zu vermeiden. Die Dehnung der vorgewölbten Platte zu einer Mulde 13 ist durch die Platten 7, 11 und 12 so begrenzt daß ein Aufreißen unter dem Blasdruck nicht mehr zu befürchten ist. In diesem Stadium kann das Werkzeug 1 in den Muldenhohlraum eingefahren werden, wie in Figur 2 gezeigt. Danach wird die Kunststoffplatte durch Verminderung des Blasdruckes von den Prallwänden 7, 11 und 12 gelöst und durch Vakuum an das Werkzeug 1 angesaugt, wobei der Wannenkörper geformt wird. Nach dem Abkühlen unter die Erweichungstemperatur wird das Formwerkzeug nach unten gefahren, die Prallplatten 7, 11, 12, die auch zu einem Kasten zusammengefaßt sein können, gehoben, der Spannrahmen gelöst und der Wannenkörper abgenommen. Die obere (Schau)Seite der Wanne erweist sich, sofern hochglänzendes Acrylglas eingesetzt worden ist, als fehlerlos glänzend, während eine Vielzahl von Störungsstellen sichtbar sind, wenn Prallplatten aus unelastischem Material verwendet werden.

## Ansprüche

1. Verfahren zum Umformen von thermoelastisch erweichten Kunststoffplatten mittels starrer Formwerkzeuge oder/und Formhilfswerkzeuge, die mit der erweichten Kunststoffplatte über eine elastische Schicht (10) in flächige Berührung treten und wenigstens vorübergehend auf die erweichte Platte verformend einwirken,

dadurch gekennzeichnet,

daß man auf die erweichte Kunststoffplatte Formwerkzeuge bzw. Formhilfswerkzeuge (7,11,12) einwirken läßt, deren starrer Körper an den Stellen, mit denen sie auf die erweichte Kunststoffplatte verformend einwirken, mit der elastischen Schicht (10) flächig verbunden ist, und daß die elastische Schicht aus einem Material mit glatter, geschlossener, mattierter Oberfläche und einer höheren Elastizität als der Elastizität der erweichten Kunststoffplatte besteht.

2. Verfahren nach Anspruch 1, dadurch gekennzeichnet, daß das mit der elastischen Schicht (10) ausgerüstete Formhilfswerkzeug (7,11,12) nur in einem begrenzten Zeitabschnitt während des Umformverfahrens mit der erweichten Kunststoffplatte in Berührung tritt und von diesem vor dessen Abkühlung unter die Erweichungstemperatur wieder getrennt wird.

3. Verfahren nach Anspruch 2, dadurch gekennzeichnet, daß die erweichte Platte (3) durch einseitigen Gasüberdruck muldenförmig gewölbt und wenigstens zum Teil zum Anliegen an dem mit der elastischen Zwischenschicht ausgerüsteten Formhilfswerkzeug (7,11,12) gebracht wird, daß In den muldenförmigen Hohlraum ein Formwerkzeug (1), das mit einer elastischen Schicht ausgestattet sein kann, eingefahren und der muldenförmig gewölbte Teil (13) der erweichten Platte durch Verminderung oder Aufhebung des Gasüberdruckes oder Einstellung eines Unterdruckes an das Formwerkzeug (1) angelegt und in Berührung mit diesem unter die Erweichungstemperatur abgekühlt wird.

4. Vorrichtung zum Umformen von thermoelastisch erweichten Kunststoffplatten, enthaltend einen Spannrahmen (2) wenigstens ein starres Formwerkzeug oder Formhilfswerkzeug (7,11,12) und eine daran angeordnete elastische Schicht (10) sowie eine Vorrichtung zur Erzeugung von verformenden Kräften, welche auf eine in dem Spannrahmen einzuspannende thermoelastisch erweichte Kunststoffplatte einzuwirken vermögen, dadurch gekennzeichnet, daß der starre Körper des Formwerkzeugs (7,11,12) oder Formhilfswerkzeugs an den Stellen, an denen dieses bei Betätigung auf die erweichte Kunststoffplatte verformend einwirkt, mit der elastischen Schicht flächig verbunden ist, und daß die elastische Schicht (10) aus einem Material mit glatter, geschlossener Oberfläche und einer höheren Elastizität als der der umzuformenden erweichten Kunststoffplatte besteht.

5. Vorrichtung nach Anspruch 5, dadurch gekennzeichnet, daß im Abstand von dem Spannrahmen (2) ein mit der elastischen Schicht ausgerüstetes Formhilfswerkzeug angeordnet ist, daß Vorrichtungen zur Erzeugung eines einseitigen Gasüberdruckes auf der anderen Seite des Spannrahmens vorhanden sind, und daß ein Formwerkzeug (1), dessen Oberfläche mit einer elastischen Schicht ausgerüstet sein kann, in der Weise bewegbar angeordnet ist, daß es durch den Spannrahmen hindurch in Richtung auf das Formhilfswerkzeug (7) ausfahrbar ist.

6. Vorrichtung nach den Ansprüchen U oder 5, dadurch gekennzeichnet, daß zwischen der elastischen Schicht (10) und dem starren Werkzeugkörper (8) eine Schicht (9) aus einem wärmeisolierenden Material angeordnet ist.

7. Vorrichtung nach Anspruch 6, dadurch gekennzeichnet, daß das wärmeisolierende Material ein Schaumstoff ist.

8. Vorrichtung nach den Ansprüchen 6 ·oder 7, dadurch gekennzeichnet, daß das Werkzeug ein Formhilfswerkzeug ist.

9. Vorrichtung nach den Ansprüchen 4 bis 8, dadurch gekennzeichnet, daß das Material der elastischen Schicht eine Shore-Härte A unter 80 bei $20^\circ$ C hat.

**Claims**

1. Process for shaping thermoelastically softened plastics sheets using fixed moulding tools and/or auxiliary moulding tools which come into surface contact with the softened plastics sheet via a flexible layer (10) and at least temporarily act to deform the softened sheet, characterised in that the softened plastics sheet is acted upon by moulding tools or auxiliary moulding tools (7, 11, 12) the rigid body of which is surface connected to the flexible layer (10) at those points where they act to deform the softened plastics sheet, and in that the flexible layer consists of a material having a smooth, sealed, matt surface and having greater elasticity than the softened plastics sheet.

2. Process according to claim 1, characterised in that the auxiliary moulding tool (7, 11, 12) equipped with the flexible layer (10) comes into contact with the softened plastics sheet only for a limited time during the shaping process and is separated from the latter before it cools to below the softening temperature.

3. Process according to claim 2, characterised in that the softened sheet (3) is given a depression-shaped convexity by the application of excess gas pressure on one side and is made to abut at least partially on the auxiliary moulding tool (7, 11, 12) provided with the elastic intermediate layer, in that a moulding tool (1) which may be equipped with an flexible layer is introduced into the depression-shaped cavity and the depression-shaped part (13) of the softened sheet is applied to the moulding tool (1) by reducing or removing the excess gas pressure or by setting up an under pressure and is cooled to below the softening temperature while remaining in contact with said moulding tool (1).

4. Apparatus for shaping thermoelastically softened plastics sheet, comprising a clamping frame (2), at least one fixed moulding tool or auxiliary moulding tool (7, 11, 12) and a flexible layer (10) provided thereon, as well as an apparatus for generating deforming forces which are able to act on a thermoelastically softened plastics sheet held in the clamping frame, characterised in that the rigid body of the moulding tool (7, 11, 12) or auxiliary moulding tool is surface connected to the flexible layer at those points where the moulding tool acts on the softened plastics sheet to deform it, and in that the flexible layer (10) consists of a material having a smooth, closed surface and greater elasticity than the softened plastics sheet which is to be shaped.

5. Apparatus according to claim 5, characterised in that, at a spacing from the clamping frame (2), there is provided an auxiliary moulding tool fitted with the flexible layer, means for generating excess gas pressure at one end are provided on the other side of the clamping frame, and a moulding tool (1), the surface of which may be provided with a flexible layer, is movable so that it can be passed through the clamping frame towards the auxiliary moulding tool (7).

6. Apparatus according to claim 4 or 5, characterised in that a layer (9) of thermally insulating material is provided between the flexible layer (10) and the fixed tool body (8).

7. Apparatus according to claim 6, characterised in that the thermally insulating material is a foam.

8. Apparatus according to claim 6 or 7, characterised in that the tool is an auxiliary moulding tool.

9. Apparatus according to claims 4 to 8, characterised in that the material of the flexible layer has a Shore-Hardness A of less than 80 at 20°C.

## Revendications

1. Procédé de formage de plaques de matière plastique ramollies thermoélastiquement au moyen d'outils de formage et/ou d'outils auxiliaires de formage rigides qui entrent en contact à plat avec la plaque de matière plastique ramollie par l'intermédiaire d'une couche élastique (10) et qui produisent, au moins temporairement, un effet de déformation sur la plaque ramollie, caractérisé en ce qu'on fait agir, sur la plaque de matière plastique ramollie, des outils de formage ou des outils auxiliaires de formage (7, 11, 12) dont les corps rigides sont unis à plat à la couche élastique (10) aux endroits où ils produisent un effet de déformation sur la plaque de matière plastique ramollie, et en ce que la couche élastique est faite d'un matériau qui présente une surface lisse, compacte et mate et possède une plus grande élasticité que celle de la plaque de matière plastique ramollie.

2. Procédé selon la revendication 1, caractérisé en ce que l'outil auxiliaire de formage (7, 11, 12), garni de la couche élastique (10), n'entre en contact avec la plaque de matière plastique ramollie que pendant une période limitée au cours du procédé de formage, et est séparé de la plaque avant le refroidissement de celle-ci au-dessous de la température de ramollissement.

3. Procédé selon la revendication 2, caractérisé en ce que la plaque ramollie (3) est cintrée en forme d'auge par surpression de gaz sur l'un de ses côtés et est appliquée au moins en partie sur l'outil auxiliaire de formage (7, 11, 12) garni de la couche élastique intermédiaire, en ce qu'un outil de formage (1), qui peut être garni d'une couche élastique, est introduit dans la cavité en forme d'auge, et la partie cintrée en forme d'auge (13) de la plaque ramollie est appliquée sur l'outil de formage (1) par réduction ou suppression de la surpression de gaz ou par création d'une dépression et elle est refroidie au-dessous de la température de ramollissement en contact avec l'outil (1).

4. Dispositif de formage de plaques de matière plastique ramollies thermoélastiquement, comprenant un cadre de serrage (2), au moins un outil de formage ou un outil auxiliaire de formage (7, 11, 12) rigide et une couche élastique (10) disposée sur ce dernier, ainsi qu'un dispositif pour la production de forces de déformation qui sont susceptibles d'agir sur une plaque de matière plastique ramollie thermoélastiquement à monter dans le cadre de serrage, caractérisé en ce que le corps rigide de l'outil de formage ou de l'outil auxiliaire de formage (7, 11, 12) est uni à plat à la couche élastique aux endroits où cet outil produit un effet de déformation sur la plaque de matière plastique ramollie lorsqu'il est actionné, et en ce que la couche élastique (10) est faite d'un matériau qui présente une surface lisse, compacte et une plus grande élasticité que celle de la plaque de matière plastique ramollie à façonner.

5. Dispositif selon la revendication 5, caractérisé en ce qu'un outil auxiliaire de formage (7) garni de la couche élastique est disposé à distance du cadre de serrage (2), en ce que des dispositifs pour la création d'une surpression de gaz unilatérale sont prévus de l'autre côté du cadre de serrage, et en ce qu'un outil de formage (1), dont la surface peut être garnie d'une couche élastique, est monté mobile de telle sorte qu'il puisse sortir en direction de l'outil auxiliaire de formage (7) a travers le cadre de serrage (2).

6. Dispositif selon la revendication 4 ou 5, caractérisé en ce qu'une couche (9) en un matériau isolant à la chaleur est disposée entre la couche élastique (10) et le corps rigide (8) de l'outil.

7. Dispositif selon la revendication 6, caractérisé en ce que le matériau isolant à la chaleur est une mousse.

8. Dispositif selon la revendication 6 ou 7, caractérisé en ce que l'outil est un outil auxiliaire de formage.

9. Dispositif selon l'une quelconque des revendications 4 à ô, caractérisé en ce que le matériau de la couche élastique a une dureté Shore A inférieure à 80 à 20° C.

FIGUR 1

FIGUR 2

FIGUR 3